# EUROPÄISCHE PATENTSCHRIFT

(11) **EP 1 874 448 B1**
(45) Veröffentlichungstag und Bekanntmachung des Hinweises auf die Patenterteilung: **14.01.2009**
(21) Anmeldenummer: 06753429.7
(22) Anmeldetag: 27.04.2006
(51) Int. Cl.: B01F 13/00, B01F 7/16, F16D 3/04, F16D 3/60, F16D 1/10, B02C 17/16, B02C 17/24, G01N 1/28

(54) **RÜHR- ODER DISPERGIERVORRICHTUNG**
STIRRING OR DISPERSING DEVICE
DISPOSITIF AGITATEUR OU DISPERSEUR

(30) Priorität: 29.04.2005 DE 102005020460
(43) Veröffentlichungstag der Anmeldung: 09.01.2008
(73) Patentinhaber: IKA - Werke GmbH & Co. KG, 79219 Staufen (DE)
(72) Erfinder: JÄGLE, Peter, 79282 Ballrechten-Dottingen (DE)
(74) Vertreter: Maucher, Wolfgang
(86) Internationale Anmeldenummer: PCT/EP2006/003920
(87) Internationale Veröffentlichungsnummer: WO 2006/117129

(56) Entgegenhaltungen:
- EP-A- 0 409 039
- FR-A- 2 289 094
- US-A1- 2002 119 200

## Beschreibung

Die Erfindung betrifft eine Rühr- oder Dispergiervorrichtung mit einem hermetisch abgeschlossenen Mischraum , einem in diesem Mischraum um eine zentrale Achse antreibbaren Dispergierwerkzeug mit einem stabförmigen Element zur Kraftübertragung eines Antriebs auf dieses Werkzeug und mit einem außerhalb des Mischraums befindlichen derartigen Antrieb, wobei das stabförmige Element am Eintritt in den Mischraum mit einer Membrane verbunden ist, welche Teil einer Wandung des Mischraums ist, und das stabförmige Element durch den Antrieb in eine taumelnde Bewegung versetzbar ist, so dass dessen im Innern des Mischraums befindliches Ende eine kreisende Bewegung ausführt.

Es sind aus dem Stand der Technik bereits Rühr- oder Mischvorrichtungen, bspw. aus der DE-A-1557186 oder der DE-A-2440079, bekannt, bei denen stabförmige Elemente beim Eintritt in einen Mischraum mit einer Membrane verbunden sind und jeweils das stabförmige Element bei der Übertragung der Kraft eines mit ihnen verbundenen Antriebs eine taumelnde Bewegung ausführt. Bei diesen Vorrichtungen ist jedoch das Rühr- und Mischwerkzeug mit dem stabförmigen Element verbunden, so dass es die Taumelbewegung des stabförmigen Elements mitmachen muss. Hierdurch bedingt können diese Vorrichtungen nur mit langsamen Drehzahlen betrieben werden, das betreffende Gut also zwar Rühren oder Mischen, eventuell aber mit einem nur ungenügenden Ergebnis. Außerdem können bei der Kraftübertragung mit diesen Vorrichtungen Unwuchten auftreten und die Vorrichtungen haben darüber hinaus durch das taumelnd umlaufende Werkzeug einen großen Platzbedarf.

Dokument EP-A-0 409 039 offenbart eine Rühr- oder Dispergiervorrichtung gemäß dem Oberbegriff des Anspruchs 1.

Es besteht deshalb die Aufgabe, eine Vorrichtung der eingangs definierten Art derart weiterzubilden, dass bei geringem Platzbedarf der Vorrichtung ein gutes Rühr- und Mischergebnis erreicht wird.

Zur Lösung dieser Aufgabe ist gemäß Anspruch 1 vorgesehen, dass das Werkzeug durch eine Anzahl von in den Mischraum einzubringende Mahlelemente oder Kugeln gebildet ist. Hierbei wird die Drehbewegung des Antriebs zunächst in eine Taumelbewegung des stabförmigen Elements überführt, dessen in dem Mischraum befindliches Ende eine kreisende Bewegung ausführt. Diese Bewegung in dem Mischraum führt wiederum dazu dass das dort befindliche Mischgut ebenso wie die Mahlelemente von der Ende des stabförmigen Elements mitgenommen und in Bewegung versetzt werden. Im Laufe dieser Bewegung kommt es zu einer Vielzahl von Zusammenstößen der Mahlelemente und mithin neben einer Durchmischung des Inhalts des Mischraums, gegebenenfalls, bei entsprechend hohen Drehgeschwindigkeiten des Antriebs auch zu einer dann gewollten Zerkleinerung oder einem Aufschluss des Mischguts oder einem Dispergieren. Durch die Lagerung des stabförmigen Elements an der Membrane und die durch dieses ausgeführte Taumelbewegung lässt sich ein vom Platzbedarf erheblich reduzierter Mischraum realisieren, in welchen das Mischgut einzubringen ist. In diesem Mischraum bewegt sich das stabförmige Element taumelnd mit einer gewissen, von der Flexibilität der Membrane abhängigen, Auslenkung und versetzt die Mahlelemente oder Kugeln sowie das Mischgut selbst in Bewegung.

Die Membrane in ihrer Auslenkung ermöglicht also die Bewegung des stabförmigen Elements, ohne dass dieses um seine eigene Achse rotieren müsste, weswegen auch keine Dichtungsringe oder dergleichen Dichtelemente im Bereich des Eintritts dieses stabförmigen Elements in den Mischraum vorgesehen werden müssen daher nicht undicht werden können. Vielmehr ergibt sich trotz Eintritts eines Antriebselement ein hermetisch dichter Mischraum, in welchem dennoch das Werkzeug mittels dieses Antriebselements mechanisch in Drehung versetzt werden kann.

Zweckmäßigerweise wird das stabförmige Element, welches zu beiden Seiten der Membrane angeordnet ist, bei einer anderen Weiterbildung der Rühr- oder Dispergiervorrichtung von der Membrane getragen.

Die angestrebte Übertragung und Umsetzung der Drehbewegung des Antriebs lässt sich bei einer anderen Ausführungsform der Rühr- oder Dispergiervorrichtung besonders einfach realisieren, bei der das stabförmige Element mit seinem dem Antrieb zugewandten Ende lose in einen exzentrischen Bereich des rotierenden Teils des Antriebs eingreift, da die Taumelbewegung des stabförmigen Elementes in diesem Fall über die Mitnahme desselben durch ein dafür an dem Antrieb vorgesehenes Mittel geschieht.

Eine bevorzugte Weiterbildung der Dispergiervorrichtung kann daher darin bestehen, dass der Antrieb einen Stift aufweist, welcher um seine mit der Antriebsachse koaxiale Querachse rotiert und welcher an dem antriebsseitigen Ende des stabförmigen Elements anliegt und so das stabförmige Element in die Taumelbewegung versetzt.

Besonders zweckmäßig ist bei einer Ausbildung der Rühr- oder Dispergiervorrichtung das stabförmige Element mit der Membrane einstückig ausgebildet. Es sind aber auch andere zweckmäßige Weiterbildungen der Verbindung des stabförmigen Elements mit der Membrane als Teil einer Wandung des Mischraums denkbar. Beispielsweise kann diese Verbindung zwischen Stab und Membrane durch chemische Reaktion der die beiden Teile bildenden Werkstoffe hermetisch dicht und kraftübertragend ausgebildet sein. In Frage kommt aber auch eine Weiterbildung, bei der die beiden Teile durch Zweikomponentenspritzverfahren eine einstückige Verbindung eingehen. Darüber hinaus ist es aber auch denkbar, die Membrane mit dem Stab zu verkleben oder den Stab zweiteilig mit Flanschen zu versehen, welche beidseits mit der Membrane verklebt, verschweißt oder chemisch verbunden sind. Alle vorgenannten Maßnahmen sind jedenfalls geeignet, die hermetische Dichtigkeit der Membrane sicherzustellen. Daneben ist im übrigen auch eine mit entsprechend hoher Klemmkraft dichte Klemmverbindung zwischen dem stabförmigen Element und der Membrane möglich.

Als Teil der Wandung kann die Membrane an dieser Wandung beispielsweise mittels einer Klemmverbindung durch ein Klemmstück festgelegt sein. Zweckmäßige Weiterbildungen von Befestigungen der Membrane an der betreffenden Wandung können darin bestehen, dass die Membrane, gegebenenfalls mit dem stabförmigen Element, mit der übrigen Wandung mittels Spritzguss, Kleben, Schweißen oder dergleichen Verbindung direkt und ohne zusätzliche Mittel, wie das oben erwähnte Klemmstück, verbunden ist.

Eine andere vorteilhafte Ausgestaltung stellt eine Rühr- oder Dispergiervorrichtung dar, bei der das stabförmige Element mehrteilig, vorzugsweise jeweils einteilig zu beiden Seiten der Membrane ausgebildet ist. Für eine solche Ausgestaltung können dann etwa stabförmige Elemente unterschiedlichen Längenmaßes vorgesehen sein, die nachträglich an der Membrane anordenbar sind, so dass Mischräume unterschiedlicher Längserstreckung und damit auch unterschiedlicher Volumina bei gegebenenfalls unverändertem Querschnitt realisierbar sind.

Besonders preiswerte Lösungen der erfindungsgemäßen Rühr- oder Dispergiervorrichtung ergeben sich, wenn das stabförmige Element geradlinig ausgebildet ist bzw. verläuft. Es sind aber auch andere Ausbildungen der Stabgeometrie denkbar, außerdem können weitere, den jeweiligen Arbeitsprozess unterstützende Elemente, beispielsweise ein Flügel oder dergleichen exzentrisches Element, an dem stabförmigen Element angeordnet werden.

Abhängig von dem Einsatzzweck der Rühr- oder Dispergiervorrichtung wird ein Benutzer verschiedene Parameter des gewünschten Arbeitsprozesses beeinflussen wollen, um zu einem optimalen Ergebnis zu gelangten. So werden beispielsweise bei einem das Mischgut zerkleinernden Vorgang eventuell nur wenige Mahlelemente bei hoher Geschwindigkeit eingesetzt werden, während, wenn das Mischgut eher zerrieben werden soll, mehr Mahlelemente bei geringerer Geschwindigkeit zum Einsatz kommen werden. Da hierbei auch Größe und Material der Mahlelemente eine Rolle spielen, kann es bei einer zweckmäßigen Weiterbildung der erfindungsgemäßen Rühr- oder Dispergiervorrichtung vorgesehen sein, dass die Mahlelemente eine unterschiedliche Größe, beispielsweise zwischen 0,25 mm und 8 mm, aufweisen und/oder aus unterschiedlichen Materialien, beispielsweise aus einem Glas oder einem metallischen oder keramischen Werkstoff , ausgebildet sind. Zusammen mit der Antriebsgeschwindigkeit kann für die jeweils eingesetzten Mahlelemente eine an dem gewünschten Ergebnis orientierte Füllhöhe des Mischraums mit den Mahlelementen von einem Benutzer individuell ausgewählt werden.

Vorteilhafterweise kann bei einer anderen Ausführungsform der Rühr- oder Dispergiervorrichtung an dem Mischraum ein lösbarer Deckel vorgesehen sein, der zum Einfüllen des Mischgutes und auch zum Auswechseln des Werkzeugs lösbar ist. Der Deckel muß dabei nicht notwendigerweise vollständig entfernt werden, sondern kann, um nicht verloren zu werden, mit irgend einer Art zusätzlicher Verbindung, beispielsweise zur Außenwand des Mischraums, oder dergleichen Verliersicherung versehen werden.

Insbesondere der Deckel, aber auch eine andere Wandung des Mischraums der Rühr- oder Dispergiervorrichtung, kann eine durchstechbare Membrane enthalten, durch welche mit Hilfe einer Kanüle und einer Spritze das Mischgut oder zuzusetzende bzw. einzumischende Bestandteile in dem Mischraum eingetragen werden oder auch entnommen können. Besonders bevorzugt gerade in dem Fall, dass die Vorrichtung tatsächlich nur eine einmalige Verwendung findet und danach einer Entsorgung zugeführt wird und beispielsweise lediglich eine Entnahme per Kanüle erfolgt, kann dabei bereits die das stabförmige Element tragende Membran als durchstechbare Membran vorgesehen sein, so dass auf die Anordnung einer weiteren. Membrane verzichtet werden kann. Auch das gleichzeitige Vorsehen mehrerer Membranen als durchstechbare Membranen ist natürlich möglich.

Außerdem kann es bei einer Weiterbildung der erfindungsgemäßen Rühr- oder Dispergiervorrichtung zweckmäßigerweise zur Erreichung eines noch besseren Misch- oder Dispergierergebnisses vorgesehen sein, dass sich an der achsparallelen Wandung zumindest bereichsweise Vorsprünge, Rippen oder dergleichen strömungsbrechende Einrichtungen befinden, die den entsprechenden Vorgang unterstützen. Gleichzeitig können diese Einrichtungen wiederum zur Festlegung weiterer, den Arbeitsprozess fördernder Elemente dienen.

Die Erfindung wird nachstehend anhand von Ausführungsbeispielen in der Zeichnung näher erläutert, Es zeigen
- Fig.1: Eine erste Ausführungsform einer Rühr- oder Dispergiervorrichtung in Explosionsdarstellung;
- Fig.2: einen Längsschnitt einer Seitenansicht der Rühr- oder Dispergiervorrichtung aus Fig.1 in zusammengesetztem Zustand und in vertikaler Stellung mit Antrieb von unten;
- Fig.3: einen Längsschnitt einer Seitenansicht einer anderen Ausführungsform der Rühr- oder Dispergiervorrichtung, nämlich mit oben angeordnetem Antrieb; und die
- Fig.4,5: zwei stirnseitige Ansichten des Querschnitts einer Ausführungsform der Rühr- oder Dispergiervorrichtung mit stabförmigem Element und in dem Mischraum befindlichen Mahlelementen.

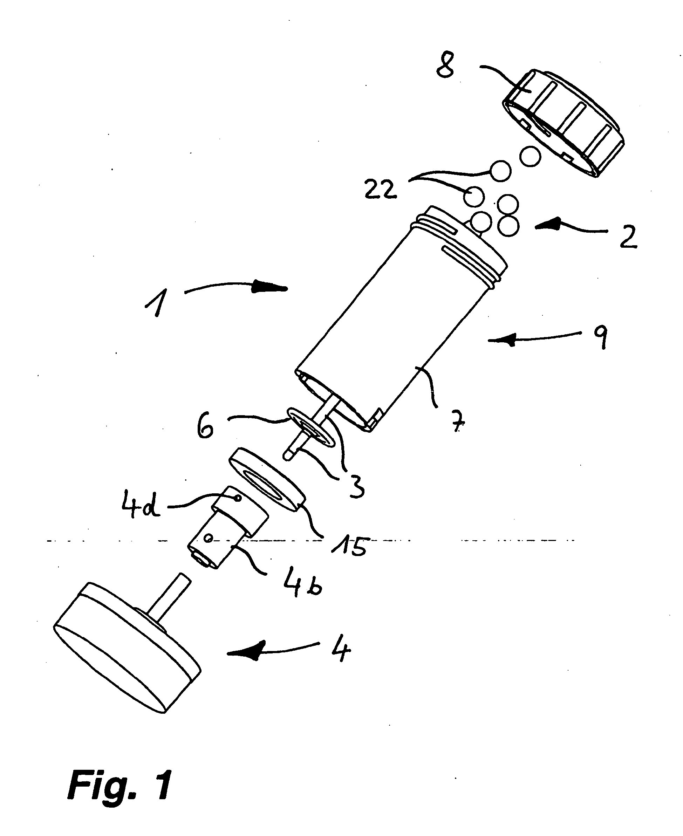

Die Fig.1 zeigt eine im Ganzen mit 1 bezeichnete Rühr- oder Dispergiervorrichtung mit einem im wesentlichen zylindrischen, röhrenförmigen Körper 9, in dessen Inneren ein hier nicht sichtbarer, hermetisch abgeschlossener Mischraum 5 gebildet wird. In diesem Mischraum 5 befindet sich ein um eine zentrale Achse antreibbares Rühr- oder Dispergierwerkzeug 2, an welches mittels eines stabförmigen Elements 3 die Kraft eines Antriebs 4 übertragen wird. Der Antrieb 4 mit Kupplung 4b befindet sich außerhalb des Mischraums 5 am unteren Ende der Rühr- oder Dispergiervorrichtung 1, welche auf den Antrieb 4 aufsteckbar und in diesem Bereich durch Festlegehilfen in Form von Bajonettverschlüssen an dem Körper 9 der Rühr- oder Dispergiervorrichtung 1 festlegbar ist. Ebenfalls ist der Fig.1 zu entnehmen, dass das stabförmige Element 3 am Eintritt in den Mischraum 5 mit der Membrane 6 verbunden ist. Das stabförmige Element 3 wird zusammen mit der Membrane 6 am Eintritt in den Mischraum 5 durch ein ringförmiges Verschlussstück 15 festgelegt, so dass die Membrane 6 einen Teil der Wandung 7 des Mischraums 5 bildet, dessen übriger Teil durch die Wände des zylindrischen Körpers und den an dessen dem Antrieb 4 abgewandten Ende befindlichen Deckel 8 gebildet sind. Durch den Antrieb 4 wird das stabförmige Element 3 in eine taumelnde Bewegung versetzt, sein in dem Mischraum 5 befindliches Ende führt dann eine kreisende Bewegung aus, wobei die Membrane 6 diese Bewegung in einer sie in gewisser Weise verformenden Walkbewegung mit vollzieht. Hierbei wird das Werkzeug 2, welches durch Mahlelemente 22 in Form von Kugeln gebildet ist, ebenfalls in Bewegung versetzt wird, wobei der Angriff des stabförmigen Elements 3 an dem Werkzeug 2 bezüglich dessen Rotationsachse exzentrisch erfolgt und das stabförmige Element 3 von der Membrane 6 getragen ist.

Zum Verschluss des zylindrischen Körpers 9 und damit auch des Mischraums 5 ist ein Deckel 8 mit einer durchstechbaren, in dieser Ansicht nicht sichtbaren, Membrane 6 vorgesehen, welcher mit Hilfe des an der Außenseite des Körpers 9 befindlichen Gewindes an dem dem Antrieb abgewandten Ende des Körpers 9 angebracht werden kann.

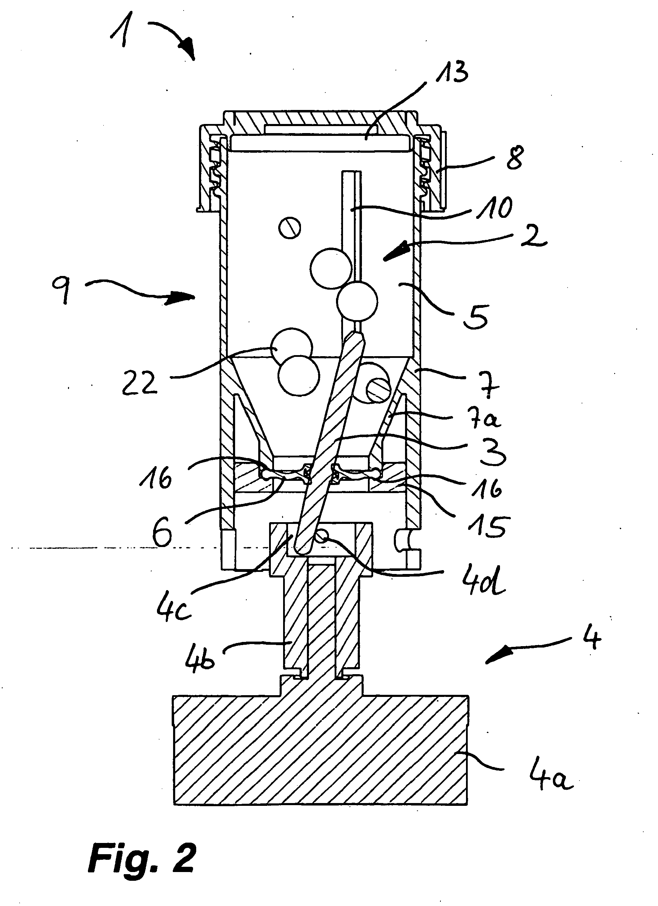

In der Fig.2 ist die Rühr- oder Dispergiervorrichtung 1 in zusammengesetztem Zustand und auf den auf einem nicht näher dargestellten Unterarund stehenden Antrieb 4 aufgesetzt zu erkennen. Der Antrieb 4 weist dabei einen Motor 4a mit axial auf der Motorwelle befestigter Kupplung 4b auf, welcher das stabförmige Element 3, das mit der Membrane 6 eine Einheit bildet, durch eine Rotationsbewegung antreibt. Dies geschieht dadurch, dass das dem Antrieb 4 zugewandte Ende des mit der Membrane 6 einstückig ausgebildeten stabförmigen Elements 3 lose in einen Raum 4c der Kupplung 4b exzentrisch eingreift, wo es von einem zur Drehachse senkrechten Stift 4d mitgenommen wird, der an der Oberfläche des stabförmigen Elements 3 anliegt. Angetrieben rotiert der Stift 4d dabei um seine Querachse, welche wiederum koaxial zur Antreibsachse ist. Die Position dieses Stifts 4d und dessen Durchmesser bestimmen den Durchmesser der Kreisbewegung der Enden des stabförmigen Elements 3 bzw. dessen Winkel zur Antriebsachse. Der exzentrische Eingriff des dem Antrieb 4 zugewandten Endes des stabförmigen Elements 3 führt dazu, dass dessen anderes, dem Werkzeug 2 zugewandtes Ende ebenfalls exzentrisch in den Mischraum 5 eingreift.

Angetrieben führen die Enden des stabförmigen Elements 3, gelagert durch die Membrane 6, eine Kreisbewegung durch, so dass an dem dem Antrieb 4 abgewandten Ende des stabförmigen Elements 3 wiederum das Rühr- oder Dispergierwerkzeug 2, hier in Form der hier unterschiedlich großen Kugeln als Mahlelemente 22, angetrieben wird. Diese Mahlelemente 22 befinden sich lose in dem Mischraum 5 und bewegen sich zusammen mit dem nicht näher dargestellten Rühr-, Misch- oder Dispergiergut durch die Bewegung des in sie hineingreifenden Endes des stabförmigen Elements 3.

Die in der Fig.2 ebenfalls zu erkennende Auslenkung der Membrane 6 als Folge der Kreisbewegung der Enden des taumelnden, geradlinig ausgebildeten, stabförmigen Elements 3, verdeutlicht, dass diese während des Betriebs einer Walkarbeit unterworfen ist, welche eben diese Auslenkung bzw. Verformung verursacht. Die Membrane 6 ist dabei am Innenrand der Wandung 7 und bezüglich des freien Endes der konisch in den Mischraum 5 auslaufenden, wandartigen Begrenzung 7a des Mischraums 5 mittels des ringförmigen Verschlussstücks 15 durch Klemmung festgelegt, wobei sich an gegenüberliegenden Enden der Begrenzung 7a und des Verschlussstücks 15 jeweils umlaufende, nutartige Vertiefungen 16 zur Aufnahme des verdickten Randes der Membrane 6 befinden.

Außerdem ist zu erkennen, dass im Innern des Mischraums an der achsparallelen Wandung 7 eine entlang dieser verlaufende Rippe mit Schneide als strömungsbrechende Einrichtung 10 angeordnet ist, während zwischen dem Verschlussstück 15 und der Mischraumbegrenzung anordenbare Rast- oder Schnappmittel nicht näher dargestellt sind.

An seinem ihrem dem Antrieb 4 abgewandten Ende ist die Vorrichtung 1 mit dem Deckel 8 versehen, welcher über ein an dem Körper 9 befindliches Außengewinde auf diesen aufgeschraubt wird und dadurch das betreffende Ende des Mischraums verschließt. Der Deckel 8 ist stirnseitig mit einer durchstechbaren Membrane 13 versehen, wodurch nach Abnahme von dem Antrieb 4 das in dem Mischraum 5 befindliche Mischgut von beiden Stirnseiten mittels Durchstechen der jeweiligen Membrane 6, 13 zugänglich ist, aber auch durch Öffnen des Deckels 8 aus dem Mischraum entnommen werden kann.

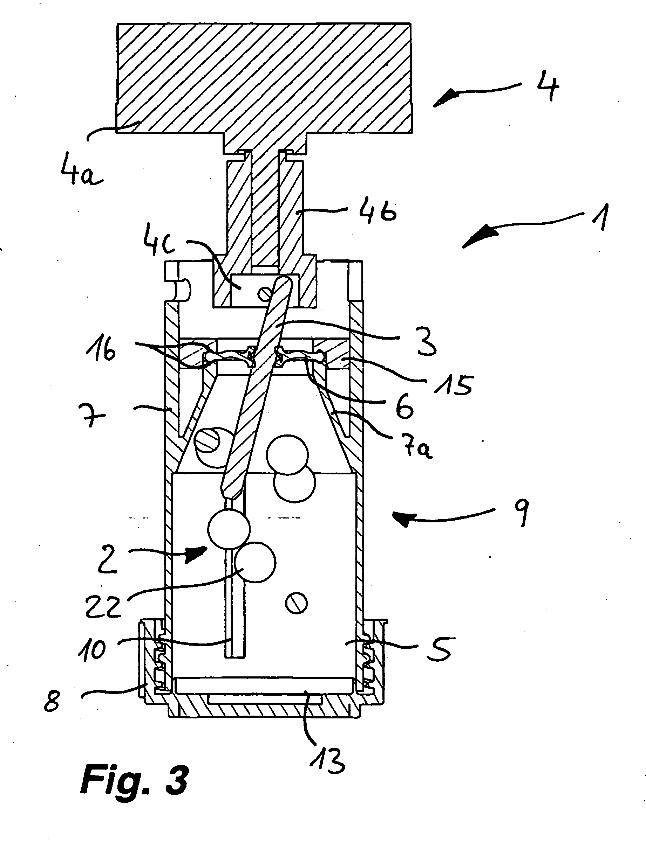

Die Fig. 3 zeigt eine Ausführungsform der Rühr- oder Dispergiervorrichtung 1, welche in wesentlichen Teilen derjenigen aus der Fig.2 entspricht, allerdings bei ebenso vertikaler Stellung auf dem Deckel 8 steht, während der Antrieb 4 der Vorrichtung 1 von oben zugeführt wird. Die Mitnahme des stabförmigen Elements 3 erfolgt dabei auch hier über einen senkrecht zur Drehachse des Antriebs 4 angeordneten Stift 4d, an welchem das dem Antrieb 4 zugewandte, außerhalb des Mischraums 5 befindliche Ende des stabförmigen Elements 3 anliegt. Dieses greift mit seinem betreffenden Ende unter Auslenkung der Membrane 6 innerhalb des Mischraums 5 in diesem Fall schräg von oben nach unten in die Mahlelemente 22 des Rühr-oder Dispergierwerkzeugs 2 ein, und versetzt diese durch die eigene kreisende Bewegung ebenfalls in Bewegung.

Der Deckel 8 mit der daran angeordneten durchstechbaren Membrane 13, welche eine stirnseitige Zugangsöffnung des Deckels 8 überdeckt und verschließt, bildet in diesem Fall den unteren Abschluss der Rühr- oder Dispergiervorrichtung 1 und gleichzeitig deren Standfläche.

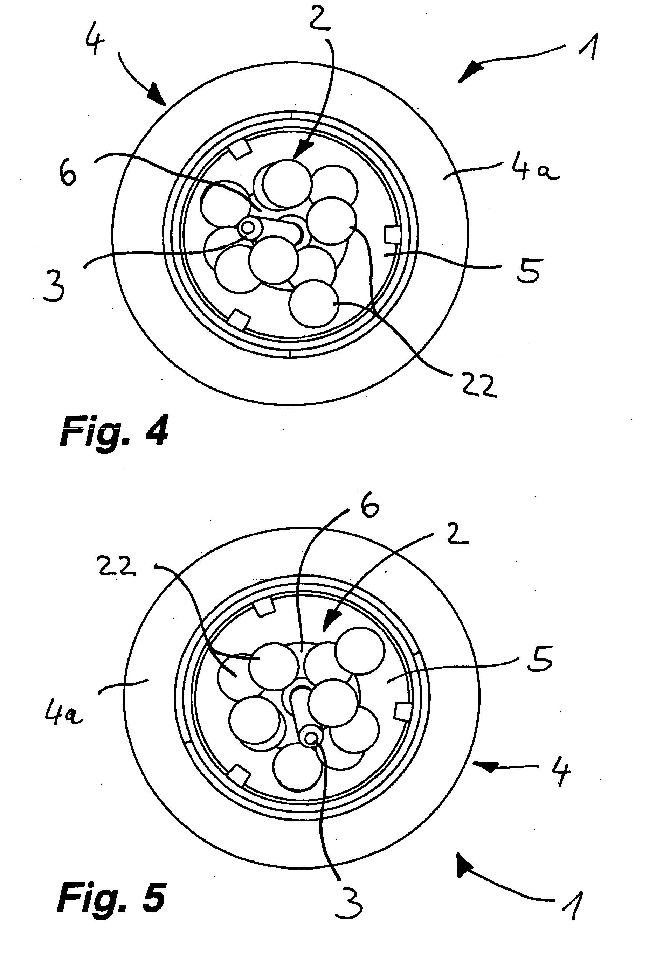

Die Fign. 4 und 5 zeigen stirnseitige Ansichten der auf den Antrieb 4 aufgesetzten Rühr- oder Dispergiervorrichtung 1 aus Richtung des abgenommenen Deckels 8 mit zwei verschiedenen Positionen des in Bewegung befindlichen, einen im wesentlichen runden Querschnitt sowie abgerundete Enden aufweisenden stabförmigen Elements 3, welches in das Rühr- oder Dispergierwerkzeug 2 in Form der lose in dem Mischraum 5 befindlichen Mahlelemente 22 eingreift. Das in den Mischraum 5 eingreifende Ende des stabförmigen Elements 3 ist an seiner Spitze außerdem abgeflacht. Durch den exzentrischen, die Membrane 6 auslenkenden Eingriff des dem Antrieb 4 zugewandten Endes des stabförmigen Elements 3 an dem nicht sichtbaren Stift 4d greift auch das in dem Mischraum 5 befindliche Ende des stabförmigen Elements 3 exzentrisch bezüglich der Antriebsachse an dem Werkzeug 2 an.

Die vorstehend beschriebene Erfindung betrifft demnach also eine Rühr- oder Dispergiervorrichtung 1 mit einem hermetisch abgeschlossenen Mischraum 5, einem in diesem Mischraum 5 um eine zentrale Achse antreibbaren Werkzeug 2 mit einem stabförmigen Element 3 zur Kraftübertragung eines Antriebs 4 auf dieses Werkzeug 2 und mit einem außerhalb des Mischraums 5 befindlichen derartigen Antrieb 4, wobei das stabförmige Element 3 am Eintritt in den Mischraum 5 mit einer Membrane 6 verbunden ist, welche Teil einer Wandung 7 des Mischraums 5 ist, und das stabförmige Element 3 durch den Antrieb 4 in eine taumelnde Bewegung versetzbar ist, so dass dessen im Innern des Mischraums 5 befindliches Ende eine kreisende Bewegung ausführt.

Um mit einfachen Mitteln ein optimales Rühr-, Dispergier-, Mahl- oder Zerkleinerungsergebnis zu erreichen ist die Rühr-oder Dispergiervorrichtung 1 derart vorgesehen, dass das Werkzeug 2 durch eine Anzahl von in den Mischraum 5 einzubringende Mahlelemente 22 oder Kugeln gebildet ist.

## Patentansprüche

1. Rühr- oder Dispergiervorrichtung (1) mit einem hermetisch abgeschlossenen Mischraum (5), einem in diesem Mischraum (5) um eine zentrale Achse antreibbaren Werkzeug (2) mit einem stabförmigen Element (3) zur Kraftübertragung eines Antriebs (4) auf dieses Werkzeug (2) und mit einem außerhalb des Mischraums (5) befindlichen derartigen Antrieb (4), wobei das stabförmige Element (3) am Eintritt in den Mischraum (5) mit einer Membrane (6) verbunden ist, welche Teil einer Wandung (7) des Mischraums (5) ist, und das stabförmige Element (3) durch den Antrieb (4) in eine taumelnde Bewegung versetzbar ist, so dass dessen im Innern des Mischraums (5) befindliches Ende eine kreisende Bewegung ausführt, **dadurch gekennzeichnet, dass** das Werkzeug (2) durch eine Anzahl von in den Mischraum (5) einzubringende Mahlelemente (22) oder Kugeln gebildet ist.

2. Rühr- oder Dispergiervorrichtung nach Anspruch 1, **dadurch gekennzeichnet, dass** die Membrane (6) das stabförmige Element (3) trägt.

3. Rühr- oder Dispergiervorrichtung nach Anspruch 1 oder 2, **dadurch gekennzeichnet, dass** das stabförmige Element (3) mit seinem dem Antrieb (4) zugewandten Ende lose in einen exzentrischen Bereich des rotierenden Teils des Antriebs (4) eingreift.

4. Rühr- oder Dispergiervorrichtung nach Anspruch 3, **dadurch gekennzeichnet, dass** der Antrieb (4) einen Stift (4d) aufweist, welcher um seine mit der Antriebsachse koaxiale Querachse rotiert und welcher an dem antriebsseitigen Ende des stabförmigen Elements (3) anliegt.

5. Rühr- oder Dispergiervorrichtung nach einem der vorhergehenden Ansprüche, **dadurch gekennzeichnet, dass** das stabförmige Element (3) mit der Membrane (6) einstückig ausgebildet ist.

6. Rühr- oder Dispergiervorrichtung nach einem der vorhergehenden Ansprüche, **dadurch gekennzeichnet, dass** das stabförmige Element (3) und die Membrane (6) durch chemische Reaktion ihrer Werkstoffe verbunden sind.

7. Rühr- oder Dispergiervorrichtung nach einem der vorhergehenden Ansprüche, **dadurch gekennzeichnet, dass** das stabförmige Element (3) mit der Membrane (6) durch eine Klebe- und/oder Flanschverbindung, eine Schweißverbindung oder eine Klemmverbindung verbunden ist.

8. Rühr- oder Dispergiervorrichtung nach einem der vorhergehenden Ansprüche, **dadurch gekennzeichnet, dass** die Membrane (6), gegebenenfalls mit dem stabförmigen Element (3), mit der übrigen Wandung (7) mittels Spritzguss, Kleben, Schweißen oder dergleichen Verbindung verbunden ist.

9. Rühr- oder Dispergiervorrichtung nach einem der vorhergehenden Ansprüche, **dadurch gekennzeichnet, dass** das stabförmige Element (3) mehrteilig, vorzugsweise jeweils einteilig zu beiden Seiten der Membrane (6) ausgebildet ist.

10. Rühr- oder Dispergiervorrichtung nach einem der vorhergehenden Ansprüche, **dadurch gekennzeichnet, dass** das stabförmige Element (3) geradlinig ausgebildet ist.

11. Rühr- oder Dispergiervorrichtung nach einem der vorhergehenden Ansprüche, **dadurch gekennzeichnet, dass** die Mahlelemente (22) eine unterschiedliche Größe aufweisen und/oder aus unterschiedlichen Materialien, insbesondere einem Glas, einem metallischen oder keramischen Werkstoff, ausgebildet sind.

12. Rühr- oder Dispergiervorrichtung nach einem der vorhergehenden Ansprüche, **dadurch gekennzeichnet, dass** an dem Mischraum (5) ein lösbarer Deckel (8) vorgesehen ist.

13. Rühr- oder Dispergiervorrichtung nach einem der vorhergehenden Ansprüche, **dadurch gekennzeichnet, dass** in einer der Wandungen (7), welche insbesondere im Deckel (8) des Mischraums vorgesehen ist, eine durchstechbare Membrane (13) angeordnet ist.

14. Rühr- oder Dispergiervorrichtung nach einem der vorhergehenden Ansprüche, **dadurch gekennzeichnet, dass** die das stabförmige Element (3) tragende Membrane (6) als durchstechbare Membrane vorgesehen ist.

15. Rühr- oder Dispergiervorrichtung nach einem der vorhergehenden Ansprüche, **dadurch gekennzeichnet, dass** an der achsparallelen Wandung (7) zumindest bereichsweise Vorsprünge, Rippen oder dergleichen strömungsbrechende Einrichtungen (10) vorgesehen sind.

## Claims

1. Stirring or dispersing apparatus (1) having a hermetically sealed mixing chamber (5), a tool (2) which is drivable about a central axis in this mixing chamber (5) with a rod-shaped element (3) for transmitting the power of a drive (4) to this tool (2) and having a drive (4) of this kind located outside the mixing chamber (5), the rod-shaped element (3) at the entrance to the mixing chamber (5) being connected to a membrane (6) which is part of a wall (7) of the mixing chamber (5), and the rod-shaped element (3) being adapted to be set gyrating by the drive (4), so that its end located inside the mixing chamber (5) performs a circling motion, **characterised in that** the tool (2) is formed by a number of grinding elements (22) or beads that are to be introduced into the mixing chamber (5).

2. Stirring or dispersing apparatus according to claim 1, **characterised in that** the membrane (6) carries the rod-shaped element (3).

3. Stirring or dispersing apparatus according to claim 1 or 2, **characterised in that** the rod-shaped element (3) engages loosely, with its end facing the drive (4), in an eccentric region of the rotating part of the drive (4).

4. Stirring or dispersing apparatus according to claim 3, **characterised in that** the drive (4) has a pin (4d) which rotates about its transverse axis that is coaxial with the drive axis and which abuts on the end of the rod-shaped element (3) nearest the drive.

5. Stirring or dispersing apparatus according to one of the preceding claims, **characterised in that** the rod-shaped element (3) is formed in one piece with the membrane (6).

6. Stirring or dispersing apparatus according to one of the preceding claims, **characterised in that** the rod-shaped element (3) and the membrane (6) are joined by chemical reaction of their materials.

7. Stirring or dispersing apparatus according to one of the preceding claims, **characterised in that** the rod-shaped element (3) is attached to the membrane (6) by an adhesive and/or flanged connection, a weld joint or a clamping connection.

8. Stirring or dispersing apparatus according to one of the preceding claims, **characterised in that** the membrane (6), optionally with the rod-shaped element (3), is attached to the remainder of the wall (7) by injection moulding, adhesion, welding or similar bonding.

9. Stirring or dispersing apparatus according to one of the preceding claims, **characterised in that** the rod-shaped element (3) is of sectional construction, preferably with one section on each side of the membrane (6).

10. Stirring or dispersing apparatus according to one of the preceding claims, **characterised in that** the rod-shaped element (3) is of rectilinear construction.

11. Stirring or dispersing apparatus according to one of the preceding claims, **characterised in that** the grinding elements (22) are of different sizes and/or are made of different materials, particularly a glass, a metallic or ceramic material.

12. Stirring or dispersing apparatus according to one of the preceding claims, **characterised in that** a releasable lid (8) is provided on the mixing chamber (5).

13. Stirring or dispersing apparatus according to one of the preceding claims, **characterised in that** a pierceable membrane (13) is arranged in one of the walls (7), which is provided in particular in the lid (8) of the mixing chamber.

14. Stirring or dispersing apparatus according to one of the preceding claims, **characterised in that** the membrane (6) that carries the rod-shaped element (3) is provided as the pierceable membrane.

15. Stirring or dispersing apparatus according to one of the preceding claims, **characterised in that** projections, ribs or similar flow-disrupting means (10) are provided in at least parts of the paraxial wall (7).

## Revendications

1. Dispositif agitateur ou disperseur (1), avec une chambre de mélange (5) hermétiquement fermée, avec un outil (2) pouvant être entraîné autour d'un axe central dans cette chambre de mélange (5) et pourvu d'un élément en forme de tige (3) destiné à transmettre la force d'un entraînement (4) à cet outil (2), et avec un tel entraînement (4) se trouvant à l'extérieur de la chambre de mélange (5), sachant que l'élément en forme de tige (3) est relié, à l'entrée dans la chambre de mélange (5), à une membrane (6) qui fait partie d'une paroi (7) de la chambre de mélange (5), et sachant que l'élément en forme de tige (3) peut être animé d'un mouvement de nutation par l'entraînement (4), de sorte que son extrémité se trouvant à l'intérieur de la chambre de mélange (5) accomplit un mouvement giratoire, **caractérisé en ce que** l'outil (2) est formé par une pluralité d'éléments de broyage (22) ou de billes à introduire dans la chambre de mélange (5).

2. Dispositif agitateur ou disperseur selon la revendication 1, **caractérisé en ce que** la membrane (6) porte l'élément en forme de tige (3).

3. Dispositif agitateur ou disperseur selon la revendication 1 ou 2, **caractérisé en ce que** l'élément en forme de tige (3), par son extrémité tournée vers l'entraînement (4), s'engage librement dans une région excentrique de la partie rotative de l'entraînement (4).

4. Dispositif agitateur ou disperseur selon la revendication 3, **caractérisé en ce que** l'entraînement (4) présente une broche (4d) qui tourne autour de son axe transversal coaxial à l'axe de l'entraînement et qui s'applique contre l'extrémité côté entraînement de l'élément en forme de tige (3).

5. Dispositif agitateur ou disperseur selon l'une des revendications précédentes, **caractérisé en ce que** l'élément en forme de tige (3) est réalisé d'un seul tenant avec la membrane (6).

6. Dispositif agitateur ou disperseur selon l'une des revendications précédentes, **caractérisé en ce que** l'élément en forme de tige (3) et la membrane (6) sont assemblés par réaction chimique de leurs matériaux.

7. Dispositif agitateur ou disperseur selon l'une des revendications précédentes, **caractérisé en ce que** l'élément en forme de tige (3) est assemblé à la membrane (6) par un assemblage collé et/ou bridé, un assemblage soudé ou un assemblage par serrage.

8. Dispositif agitateur ou disperseur selon l'une des revendications précédentes, **caractérisé en ce que** la membrane (6), éventuellement avec l'élément en forme de tige (3), est assemblée au reste de la paroi (7) par moulage par injection, collage, soudage ou un assemblage analogue.

9. Dispositif agitateur ou disperseur selon l'une des revendications précédentes, **caractérisé en ce que** l'élément en forme de tige (3) est réalisé en plusieurs parties ou pièces, de préférence avec une partie ou pièce unique respective de part et d'autre de la membrane (6).

10. Dispositif agitateur ou disperseur selon l'une des revendications précédentes, **caractérisé en ce que** l'élément en forme de tige (3) est réalisé rectiligne.

11. Dispositif agitateur ou disperseur selon l'une des revendications précédentes, **caractérisé en ce que** les éléments de broyage (22) présentent différentes tailles et/ou sont réalisés dans différents matériaux, notamment en verre, en matériau métallique ou en matériau céramique.

12. Dispositif agitateur ou disperseur selon l'une des revendications précédentes, **caractérisé en ce qu'**un couvercle amovible (8) est prévu sur la chambre de mélange (5).

13. Dispositif agitateur ou disperseur selon l'une des revendications précédentes, **caractérisé en ce qu'**une membrane transperçable (13) est disposée dans une des parois (7), qui est notamment prévue dans le couvercle (8) de la chambre de mélange (5).

14. Dispositif agitateur ou disperseur selon l'une des revendications précédentes, **caractérisé en ce que** la membrane (6) portant l'élément en forme de tige (3) est prévue sous forme de membrane transperçable.

15. Dispositif agitateur ou disperseur selon l'une des revendications précédentes, **caractérisé en ce que** des saillies, des nervures ou des organes analogues (10) brisant le flux sont prévus au moins sectoriellement sur la paroi (7) parallèle à l'axe.
